Europäisches Patentamt

**European Patent Office**

Office européen des brevets

(19)

(11) Numéro de publication : **0 246 124 B1**

## (12) FASCICULE DE BREVET EUROPEEN

(45) Date de publication du fascicule du brevet :
09.01.91 Bulletin 91/02

(51) Int. Cl.⁵ : **B60N 2/10**

(21) Numéro de dépôt : **87400865.9**

(22) Date de dépôt : **15.04.87**

(54) **Siège à dossier rabattable et notamment siège avant de véhicule automobile.**

Le dossier contient des informations
techniques présentées postérieurement au
dépôt de la demande et ne figurant pas dans le
présent fascicule.

(30) Priorité : **29.04.86 FR 8606193**

(43) Date de publication de la demande :
**19.11.87 Bulletin 87/47**

(45) Mention de la délivrance du brevet :
**09.01.91 Bulletin 91/02**

(84) Etats contractants désignés :
**AT BE CH DE ES GB IT LI LU NL SE**

(56) Documents cités :
DE-A- 3 042 713
DE-A- 3 314 230

(56) Documents cités :
GB-A- 2 059 757
US-A- 3 781 062
US-A- 4 082 353
US-A- 4 365 838

(73) Titulaire : **ECIA - EQUIPEMENTS ET
COMPOSANTS POUR L'INDUSTRIE
AUTOMOBILE
F-25400 Audincourt (Doubs) (FR)**

(72) Inventeur : **Deley Serge
1 route d'Audincourt
25230 Seloncourt (FR)**
Inventeur : **Fourrey Francois
32 rue du Petit Chenois
25200 Montbeliard (FR)**

(74) Mandataire : **Polus, Camille et al
c/o Cabinet Lavoix 2, Place d'Estienne d'Orves
F-75441 Paris Cedex 09 (FR)**

## Description

La présente invention concerne un siège tout particulièrement adapté à être utilisé comme siège avant dans un véhicule à deux portes dans lequel il est nécessaire de rabattre le dossier du siège avant sur son assise pour permettre l'accès aux places arrière.

Dans les sièges avant de ce type, le dossier est généralement monté pivotant sur l'axe d'articulation qui le relie à l'assise. Cette disposition facilite la réalisation et simplifie le verrouillage mais malheureusement ne laisse disponible qu'un espace relativement étroit pour l'entrée ou la sortie d'un passager arrière.

Il a donc été proposé de réaliser des sièges dont l'assise bascule également en direction du tableau de bord. Le passage dégagé est ainsi considérablement agrandi mais le dispositif de verrouillage doit être nettement plus résistant c'est à dire plus complexe. Par ailleurs, il est pratiquement impossible d'utiliser dans ce cas un siège réglable en hauteur ; et en inclinaison.

Dans d'autres sièges tels que ceux décrits dans les US-A-4 365 838, GB-A-2 059 757 et DE-A-33 14 230 un accroissement de l'espace dégagé est obtenu en reliant le dossier à l'assise par l'intermédiaire d'une biéllette d'articulation qui prolonge le dossier vers l'avant du siège et permet à celui-ci d'être rabattu autour d'un point situé en avant de son plan normal d'utilisation. Toutefois ces sièges présentent les mêmes inconvénients que les précédents en ce qui concerne le réglage en hauteur et par suite le verrouillage.

La présente invention a pour but de remédier à ces inconvénients en fournissant un siège à dossier basculant qui permet d'obtenir un dégagement important sans déplacer l'assise et, en outre, peut être associé à un dispositif de soulèvement de l'arrière du siège.

Par rapport à l'état de la technique mentionné ci-dessus, l'invention a pour objet, un siège à dossier basculant selon le préambule de la revendication 1 et caractérisé par les caractéristiques mentionnées dans sa partie caractérisante.

L'axe de pivotement de la biellette sur le flasque de support constitue l'axe de rabattement du dossier sur l'assise, et par suite l'axe autour duquel le dossier est basculé lorsque l'on veut accéder à l'arrière du véhicule. Le dossier est alors complètement écarté du passage ce qui assure un dégagement maximal. L'axe de liaison entre l'assise et le dossier peut être déplacé pour assurer le réglage en hauteur

De préférence l'axe de liaison traverse, entre l'assise et le dossier, une lumière d'un flasque fixe de support et est fixé sur une ferrure pivotante reliée à une commande de réglage du siège en hauteur, et ce réglage provoque un déplacement simultané et identique du crochet de verrouillage.

L'efficacité du crochet de verrouillage est ainsi conservée quelle que soit la position du siège.

La description ci-dessous d'un mode de réalisation, donné à titre d'exemple non limitatif est représenté aux dessins annexés, fera d'ailleurs ressortir les avantages et caractéristiques de l'invention.

Sur ces dessins :

– la Fig. 1 montre la liaison entre les armatures de l'assise et du dossier du siège de l'invention, en coupe suivant la ligne I-I de la Fig. 2,

– la Fig.2 est une vue en élévation des organes de liaison entre le dossier et l'assise, ces derniers n'étant pas représentés pour simplifier la Figure,

– la Fig. 3 est une vue en coupe suivant la ligne III-III de la Fig. 2,

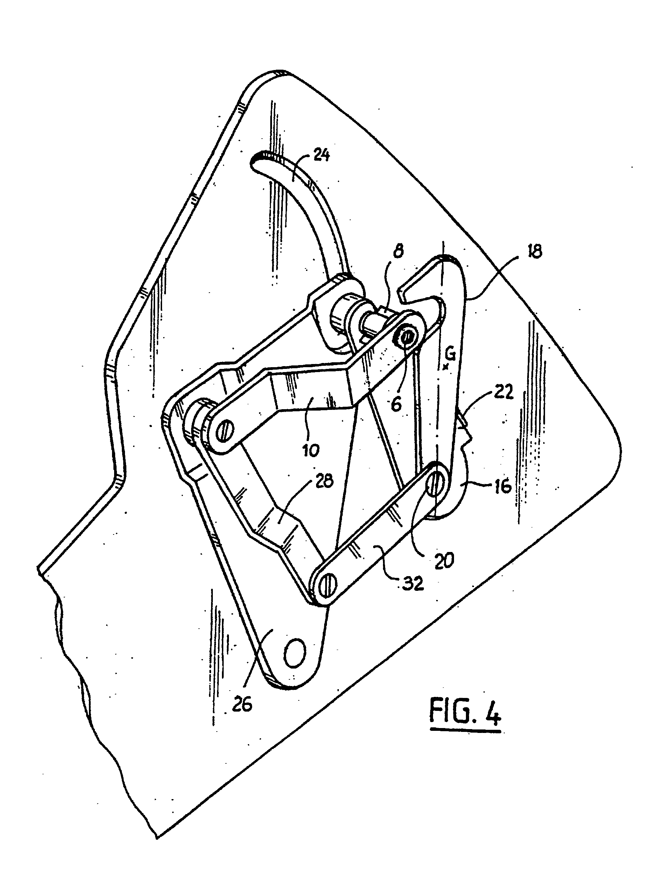

– la Fig. 4 est une vue en perspective de la liaison entre l'assise et le dossier représentée sur la Fig. 2. Les armatures de siège et notamment de siège de véhicule automobile, de même que les organes qui les assemblent ou commandent leurs déplacements, étant généralement symétriques par rapport à l'axe médian longitudinal du siège, seul l'un des côtés du siège a été représenté et sera décrit, l'autre côté étant identique.

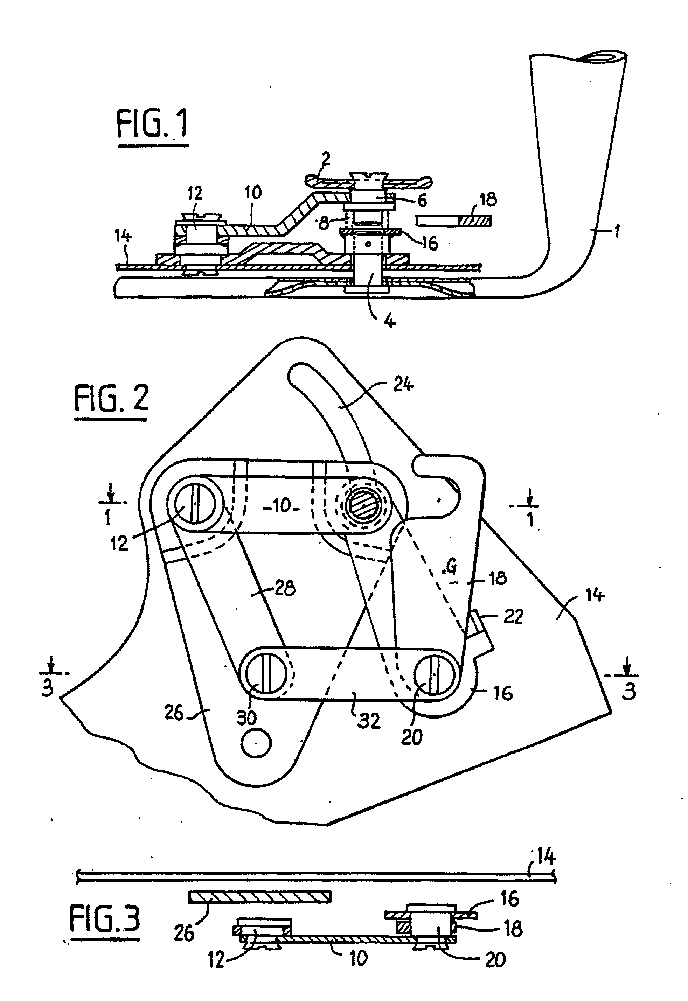

Comme le montre la Fig.1, l'armature 1 de l'assise du siège est reliée à l'armature 2 du dossier par un axe de liaison formé par deux tronçons 4 et 6. Le tronçon 4 est fixé sur l'armature 1 de l'assise et porte un demi-palier 8 qui reçoit le tronçon 6 qui, lui, est solidaire de l'armature 2 du dossier. Le tronçon 6 est par ailleurs, solidaire d'une biellette 10 montée pivotante par un axe 12 sur un flasque de support 14 qui peut être solidaire du plancher du véhicule ou mobile en translation par rapport à ce dernier. Le demi-palier 8 est disposé de manière que le tronçon d'axe 6 puisse parcourir un arc de cercle autour de l'axe 12 en entraînant le dossier 2 qui peut ainsi basculer par rapport à l'assise.

De préférence, comme représenté, l'axe 12 se trouve plus près de l'avant du siège que l'axe de liaison 4, 6 de sorte que le dossier est non seulement rabattu sur l'assise mais également déplacé vers l'avant au cours du pivotemment de la biellette 10, ce qui accroît le dégagement fourni par ce basculement.

Une biellette 16 suspendue au tronçon d'axe 4 à proximité du demi-palier 8 porte à son extrémité inférieure un crochet 18 qui se dresse verticalement vers le haut en direction du demi-palier 8. Le crochet 18 est articulé en 20 sur la biellette 16 mais une butée 22 empêche son déplacement vers l'arrière, c'est à dire son éloignement du demi-palier 8 au-delà de la position de repos choisie, c'est à dire de la position dans laquelle son centre de gravité G est légèrement décalé en direction de la butée 22 par rapport à la verticale passant par le centre de l'axe 20. Le crochet 18 est ainsi dans une position légèrement instable et tend par suite à basculer en direction du tronçon 6 et du palier 8 à la moindre poussée ou à la moindre inclinaison de son support. Un dispositif de déverrouillage de tout type approprié est bien entendu prévu pour écarter le crochet 18 de la position d'emboîtement sur le tronçon 6 et le demi-palier 8 et le ramener dans la position de repos sensiblement verticale représentée.

De préférence, le flasque de support 14 comporte une lumière incurvée sensiblement verticale 24 et le tronçon d'axe 6 est susceptible de se déplacer dans cette lumière, c'est à dire de prendre diverses positions en hauteur en entraînant avec lui l'armature de l'assise 1 et celle du dossier 2, ce qui modifie le réglage en hauteur du siège concerné. Le tronçon d'axe 4 est alors solidaire d'une ferrure ou plaquette 26 montée pivotante sur l'axe 12 d'articulation de la biellette 10 et reliée à son extrémité opposée à un dispositif de réglage du siège en hauteur, de tout type approprié, qui n'a pas été représenté pour simplifier le dessin (Fig. 2).

Sur l'axe 12 est fixée une biellette 28 qui est sensiblement parallèle à la biellette 16 et porte à son extrémité 30 une biellette pivotante 32, sensiblement parallèle à la biellette 10 et articulée sur l'axe 20 d'articulation du crochet sur la biellette 16. L'ensemble des biellettes 28, 32 et 16 forme ainsi avec la plaquette 26, ou plus exactement la portion de celle-ci située entre les axes 12 et 4, un parallèlogramme déformable qui porte le crochet 18 et le relie à l'axe de liaison 4, 6 du dossier et de l'assise.

Lorsque l'on veut régler la position en hauteur de l'arrière du siège, c'est à dire lorsque la ferrure 26 pivote autour de l'axe 12 et que l'axe de liaison 4, 6 se déplace dans la lumière 24, l'axe 20 effectue un déplacement analogue autour de l'axe 30 qui est fixe et la biellette 16 se déplace parallèlement à elle-même et à la biellette fixe 28, de sorte que le crochet 18 conserve une position constante par rapport à l'axe 4 et reste sensiblement vertical. Par ailleurs, le léger décalage du centre de gravité G du crochet 18 par rapport à la verticale tend à faire basculer ce dernier en direction de la butée 22 de sorte que ce crochet reste appliqué contre cette butée, et ne peut basculer qu'en direction de l'axe 4, 6, c'est à dire vers la position de verrouillage.

Dans toutes les positions du siège le crochet 18 reste donc prêt à basculer en direction du demi-palier 8 et du tronçon d'axe 6 et à verrouiller le dossier sur l'assise au moindre incident.

Le basculement du dossier s'effectue de la même manière quel que soit le réglage en hauteur, et il ne modifie en rien ce réglage puisque seul le tronçon d'axe 6 est soulevé et pivote avec la biellette 10 autour de l'axe 12. Le tronçon 4 restant immobile. L'utilisateur retrouve donc exactement la position choisie après la remise en place du dossier.

**Revendications**

1. Siège à dossier basculant pour véhicule automobile ou analogue, comportant une armature de dossier (2), une armature d'assise (1) et une biellette (10) **prolongeant vers l'avant l'armature de dossier et articulée à son extrémité avant** sur un axe (12) de pivotement du dossier **sur la structure d'assise** et des moyens (18) de verrouillage de cette biellette, caractérisé en ce que la biellette (10) est montée pivotante autour de l'axe de pivotement (12) sur un flasque de support (14) et **à son extrémité opposée sur un axe (4, 6) de liaison de l'armature du dossier (2) à l'armature de l'assise (1)** et en ce que l'axe de liaison (4, 6) est formé par deux tronçons dont l'un (6) constitue la liaison du dossier (2) avec la biellette (10) tandis que l'autre tronçon (4) est solidaire de l'assise (1) et comporte un demi palier (8) pour la réception du premier tronçon (6), les moyens de verrouillage comportant un crochet (18) susceptible de verrouiller le premier tronçon (6) dans le demi palier (8)

2. Siège suivant la revendication 1, caractérisé en ce que le crochet de verrouillage (18) est supporté par l'intermédiaire d'un parallèlogramme déformable ayant un côté constitué par la biellette articulée (10), et deux côtés opposés constitués respectivement par une biellette fixe (28) portée sur l'axe (12) de pivotement de la biellette articulée sur le flasque du support (14), et par une biellette (16) de liaison de la partie inférieure du crochet (18) à l'axe (4, 6) de liaison du dossier et de l'assise

3. Siège suivant l'une des revendications 1 et 2, caractérisé en ce que dans la position normale du siège, le crochet de verrouillage (18) et dressé dans une position sensiblement verticale de déverrouillage qui est légèrement instable de sorte qu'il bascule de lui-même dans la position de verrouillage dès que le siège est déplacé.

4. Siège suivant l'une des revendications 1 à 3, caractérisé en ce que le crochet de verrouillage (18) est articulé à sa partie inférieure à une certaine distance au-dessous de l'axe (4, 6) de liaison de l'assise au dossier et est en contact avec une butée (22) interdisant un basculement qui l'éloignerait du demi-palier (8) et de l'axe (6).

5. Siège selon la revendication 4, caractérisé en ce que le crochet de déverrouillage (18) a son centre de gravité (G) légèrement décalé par rapport à la verticale en direction de la butée (22).

6. Siège suivant l'une des revendications précédentes, caractérisé en ce que l'axe de liaison de l'assise et du dossier (4, 6) traverse une lumière (24) sensiblement verticale du flasque de support (14) et une ferrure pivotante (26) reliée à un dispositif de commande du réglage en hauteur du siège de sorte que ce réglage déplace simultanément le crochet de verrouillage (18).

## Ansprüche

1. Sitz mit verschwenkbarer Rückenlehne für Kraftfahrzeuge oder dergleichen mit einem Rückenlehnen-Rahmen (2), einem Sitzflächen-Rahmen (1) und einem Arm (10), der an einem Ende an einer Achse (4> 6) zur Verbindung des Rahmens (2) der Rückenlehne mit dem Rahmen (1) der Sitzfläche und an seinem entgegengesetzten Ende an einer vor der Achse (4, 6) zur Verbindung der Rückenlehne mit der Sitzfläche gelegenen Schwenkachse (12) der Rückenlehne angelenkt ist, und Einrichtungen (18) zur Verriegelung dieses Arms, dadurch gekennzeichnet, daß der Arm (10) um die Schwenkachse (12) drehbar an einer Tragwange (14) montiert ist und daß die Verbindungsachse (4, 6) aus zwei Achsenstücken besteht, deren eines (6) das Gelenk zwischen der Rückenlehne (2) und dem Arm (10) bildet, während das andere Achsenstück (4) mit der Sitzfläche (1) fest verbunden ist und eine Lagerhälfte (8) zur Aufnahme des ersten Achsenstücks (6) besitzt, wobei die Verriegelungseinrichtungen aus einem Haken (18) bestehen, der das erste Achsenstück (6) in der Lagerhälfte (8) verriegeln kann.

2. Sitz nach Anspruch 1, dadurch gekennzeichnet, daß der Verriegelungshaken (18) über ein verformbares parallelogramm getragen ist, das eine aus dem schwenkbaren Arm (10) bestehende Seite und zwei einander entgegengesetzte Seiten besitzt, die aus einem feststehenden Arm (28), der von der Drehachse (12) des an der Tragwange (14) angelenkten Arms getragen ist, und aus einem Arm (16) bestehen, der den unteren Teil des Hakens (18) mit der Achse (4, 6) zur Verbindung der Rückenlehne mit der Sitzfläche verbindet.

3. Sitz nach einem der Ansprüche 1 und 2, dadurch gekennzeichnet, daß der Verriegelungshaken (18) sich in der normalen Stellung des Sitzes in einer im wesentlichen vertikalen Entriegelungsstellung befindet, die leicht unstabil ist, so daß er von selbst in die Verriegelungsstellung kippt, wenn der Sitz bewegt wird.

4. Sitz nach einem der Ansprüche 1 bis 3, dadurch gekennzeichnet, daß der Verriegelungshaken (18) in seinem unteren Teil in einem gewissen Abstand unterhalb der Achse (4, 6) zur Verbindung der Sitzfläche mit der Rückenlehne angelenkt ist und mit einem Anschlag (22) in Berührung ist, der ein Kippen von der Lagerhälfte (8) und der Achse (6) weg verhindert.

5. Sitz nach Anspruch 4, dadurch gekennzeichnet, daß der Schwerpunkt (G) des Entriegelungshakens (18) aus der Vertikalen heraus leicht auf den Anschlag (22) zu versetzt ist.

6. Sitz nach einem der vorhergehenden Ansprüche, dadurch gekennzeichnet, daß die Achse (4, 6) zur Verbindung der Sitzfläche und der Rückenlehne eine im wesentlichen vertikale Öffnung (24) der Tragwange (14) und ein verschwenkbares Teil (26) durchquert, das mit einer Vorrichtung zur Höhenverstellung des Sitzes verbunden ist, so daß durch diese Höhenverstellung gleichzeitig der Verriegelungshaken (18) bewegt wird.

## Claims

1. A seat having a tilting back, for a motor vehicle or the like, comprising a back fitting (2) and a seat fitting (1) and a connecting rod (10) hinged at one end to a pivot (4, 6) connecting the back fitting (2) to the seat fitting (1) and, at its opposite end, to a pivot (12) of the back disposed forwardly of the pivot (4, 6) connecting the back to the seat, and means (18) for locking said connecting rod, characterized in that the connecting rod (10) is mounted to pivot around the pivot (12) on a supporting flange (14), and the connecting pivot (4, 6) is formed by two portions, one (6) of which forms the articulation of the back (2) to the connecting rod (10), while the other portion (4) is connected to the seat (1) and comprises a half-bearing (8) for receiving the first portion (6), the locking means comprising a hook (18) adapted to lock the first portion (6) in the half-bearing (8).

2. A seat according to claim 1, characterized in that the locking hook (18) is supported via a deformable parallelogram having one side formed by the articulated connecting rod (10), the two opposite sides being formed respectively by a fixed connecting rod (28) borne by the pivot (12) of the connecting rod articulated to the supporting flange (14) and by a connecting rod (16) connecting the lower portion of the hook to the pivot connecting the back and the seat.

3. A seat according to one of claims 1 or 2, characterized in that in the normal position of the seat the locking hook (18) is raised into a substantially vertical unlocking position which is slightly unstable, so that the hook spontaneously tilts into the locking position as soon as the seat is moved.

4. A seat according to one of claims 1 to 3, characterized in that the locking hook (18) is articulated in its lower portion at a certain distance below the pivot (4, 6) connecting the seat to the back and is in contact with a stop (22) preventing tilting which would move the hook away from the half-bearing (8) and the pivot (6).

5. A seat according to claim 4, characterized in that the unlocking hook (18) has its centre of gravity (9) slightly offset in relation to the vertical in the direction of the stop (22).

6. A seat according to one of the preceding claims, characterized in that the pivot (4, 6) connecting the seat and the back extends through a suitably vertical aperture (24) in the supporting flange (14) and a pivoting fitting (26) connected to a device for so controlling the vertical adjustment of the seat that said adjustment simultaneously displaces the locking hook (18)

FIG.1

FIG.2

FIG.3

FIG. 4